(19) Europäisches Patentamt
European Patent Office
Office européen des brevets

(11) EP 0 890 607 B1

(12) FASCICULE DE BREVET EUROPEEN

(45) Date de publication et mention de la délivrance du brevet:
**26.03.2003 Bulletin 2003/13**

(51) Int Cl.[7]: **C08K 9/02**, C08C 19/44, B60C 1/00, C08L 21/00

(21) Numéro de dépôt: **98111133.9**

(22) Date de dépôt: **17.06.1998**

(54) **Composition de caoutchouc à base de noir de carbone ayant de la silice fixée à sa surface et de polymère diénique fonctionnalisé alcoxysilane**

Kautschukzusammensetzung auf der Basis von Russ an dessen Oberfläche Silica fixiert ist und von einem alkoxysilanfunktionellen Dienpolymer

Rubber composition containing a carbon black having silica adhered to its surface and an alkoxysilane functional dienepolymer

(84) Etats contractants désignés:
**AT BE DE ES FR GB IT**

(30) Priorité: **11.07.1997 FR 9709048**

(43) Date de publication de la demande:
**13.01.1999 Bulletin 1999/02**

(73) Titulaire: **Compagnie Générale des Etablissements MICHELIN-MICHELIN & CIE**
**63040 Clermont-Ferrand Cedex 09 (FR)**

(72) Inventeur: **Labauze, Gérard**
**63100 Clermont-Ferrand (FR)**

(74) Mandataire: **Cohen, Sylvia**
**Michelin & Cie,**
**Service SGD/LG/PI-LAD**
**63040 Clermont-Ferrand Cedex 09 (FR)**

(56) Documents cités:
**EP-A- 0 692 493** **EP-A- 0 711 805**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 890 607 B1

Printed by Jouve, 75001 PARIS (FR)

## Description

La présente invention est relative à une composition de caoutchouc utilisable notamment pour la fabrication d'enveloppes de pneumatiques, possédant des propriétés hystérétiques et physiques améliorées à l'état vulcanisé, comprenant un polymère diénique fonctionnalisé alcoxysilane et à titre de charge renforçante, du noir de carbone ayant de la silice fixée à sa surface.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation de polymères modifiés avec du noir de carbone comme charge renforçante dans le but d'obtenir une bonne interaction entre le polymère modifié et le noir de carbone, l'usage de charge blanche, notamment la silice, s'étant révélé inapproprié en raison du faible niveau de certaines propriétés de telles compositions et, par voie de conséquence, de certaines propriétés pneumatiques mettant en oeuvre ces compositions telles que la faible résistance à l'usure. A titre d'exemples illustratifs de cet art antérieur, nous pouvons citer le brevet US-B- 4 677 165 qui décrit la réaction de polymères vivants fonctionnalisés avec des dérivés de la benzophénone pour obtenir des propriétés améliorées dans les compositions contenant du noir de carbone. Dans le même but, le brevet US-B- 4 647 625 décrit la fonctionnalisation d'élastomère par réaction de polymères vivants avec la N-méthylpyrrolidine. Les demandes de brevets EP-A-0 590 491 et EP-A-0 593 049 décrivent des polymères portant des fonctions amines permettant une meilleure interaction entre le polymère et le noir de carbone.

Quelques solutions ont également été proposées concernant l'utilisation de la silice à titre de charge renforçante dans des compositions destinées à constituer des bandes de roulement de pneumatiques. Ainsi les demandes de brevets EP-A-0 299 074 et EP-A-0 447 066 décrivent des polymères fonctionnalisés comportant des fonctions alcoxysilanes. Seuls ces polymères fonctionnalisés ont été décrits dans l'art antérieur comme efficace pour réduire l'hystérèse et efficaces pour améliorer la tenue à l'abrasion, cependant leurs propriétés restent insuffisantes pour permettre la mise en oeuvre de ces polymères dans des compositions destinées à constituer des bandes de roulement de pneumatiques. Par ailleurs, la formulation de ces polymères pose des problèmes d'évolution des macrostructures lors de l'élimination du solvant de polymérisation, ce qui conduit à une sévère dégradation des propriétés potentiellement intéressantes. En outre, cette évolution est très peu contrôlable.
De plus, des réactions de couplage sont souvent observées lors de telles réactions de fonctionnalisation et, afin de les minimiser, un excès d'alcoxysilane et/ou un mélangeage intense sont généralement utilisés.

Cet intérêt pour les compositions renfermant de la silice a été relevé récemment avec la publication de la demande de brevet EP-A-0 501 227 qui divulgue une composition de caoutchouc vulcanisable au soufre obtenue par le travail thermomécanique d'un copolymère de diène conjugué et d'un composé vinylaromatique et l'utilisation d'une silice précipitée particulière hautement dispersible. Cette composition qui présente un excellent compromis entre plusieurs propriétés contradictoires, permet la fabrication de pneumatiques ayant une bande de roulement chargée à la silice particulière.

Cependant dans les compositions à base de silice, des agents de liaison en quantité relativement élevée doivent être utilisés pour que ces compositions gardent de bonnes propriétés de résistance mécanique. Ces matériaux ont des conductivités électriques très faibles qui, dans certaines circonstances particulières, ne permettent pas toujours d'évacuer par le sol efficacement l'électricité statique accumulée, et rend souhaitable une réalisation de pneumatiques plus complexe utilisant des solutions anciennes et reprises notamment dans les publications US-B-5 518 055, EP-A-0 705 722 ou EP-A-0 718 126 sous forme d'une zébrure de caoutchouc conductrice traversant la bande de roulement, ou dans la demande de brevet EP-A-0 556 890 sous forme d'une addition de polymères conducteurs particuliers à la composition de caoutchouc constituant la bande de roulement des pneumatiques.

Plus récemment les demandes de brevet WO 96/37547 et EP-A-0 711 805 ont décrit des compositions de caoutchouc utilisant à titre de charge renforçante du noir de carbone ayant de la silice fixée sur sa surface, à base de polymère diénique fonctionnalisé ou non et d'agent de recouvrement et de couplage silane. Ces compositions semblent présenter des propriétés d'hystérèse améliorées par rapport à des compositions renfermant du noir de carbone à titre de charge renforçante. L'utilisation d'agent de recouvrement et de couplage silane est cependant toujours nécessaire en quantité relativement élevée.
Par ailleurs, la demande de brevet EP-A-0 711 805 révèle l'obtention de propriétés hystérétiques améliorées avec une

composition comportant un polymère fonctionnalisé reconnu pour améliorer les propriétés hystérétiques avec le noir de carbone, un agent de couplage et du noir de carbone ayant de la silice fixée à sa surface à titre de charge renforçante, en comparaison avec une composition utilisant de la silice peu dispersible à titre de charge renforçante, sans donner, cependant, d'indications concernant l'évolution des autres propriétés et en particulier les propriétés physiques.

La demanderesse vient de découvrir de manière surprenante que des compositions vulcanisées comprenant du noir de carbone ayant de la silice fixée à sa surface à titre de charge renforçante et certains polymères diéniques particuliers fonctionnalisés alcoxysilanes possèdent des propriétés de caoutchouterie, et en particulier, des propriétés hystérétiques et physiques, améliorées par rapport à des compositions à base de polymères diéniques non fonctionnels ou fonctionnels adaptés au noir de carbone et de même niveau que des compositions à base de polymères diéniques, fonctionnalisés ou non, comportant un agent de liaison et de la silice à titre de charge renforçante avec, de plus, par rapport à ces dernières compositions une nette augmentation de la conductivité électrique.

L'invention concerne une composition de caoutchouc vulcanisable comprenant au moins un polymère diénique fonctionnalisé, du noir de carbone ayant de la silice fixée à sa surface à titre de charge renforçante et les autres constituants usuels de telles compositions, caractérisée en ce que le polymère diénique est un polymère diénique fonctionnalisé avec un agent de fonctionnalisation répondant à la formule générale I:

$$(Y)_m\text{-}R^1\text{-}Si(OR^2)_{3\text{-}n}R^3{}_n$$

dans laquelle :

Y représente les restes

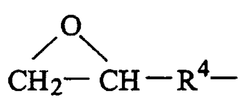

ou

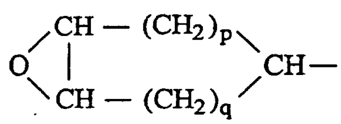

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement.

Par polymères diéniques fonctionnalisés, on entend tous les polymères entièrement fonctionnalisés ou substantiellement fonctionnalisés avec un composé répondant à la formule générale I qui satisfont simultanément aux 2 rapports suivants :

$$PF = \frac{Ns}{Np \times (fn)} \geq 0{,}85 \qquad \text{et} \qquad PV = \frac{Ne}{Ns \times m} \geq 0{,}90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé
m a la signification indiquée précédemment.

Le nombre de moles de silicium et le nombre de moles de fonction époxy présents dans le polymère fonctionnalisé peuvent être déterminés par mesure à l'aide des techniques connues de l'homme de l'art comme la résonance magnétique nucléaire (RMN), la colorimétrie, etc...

Le nombre Np est obtenu par le rapport masse de polymère sur masse moléculaire en nombre du polymère, cette dernière étant déterminée par osmométrie ou tonométrie.

Parmi les agents répondant à la formule générale I conviennent à titre préférentiel le 2-glycidyloxyéthyltriméthoxysilane, le 3-glycidyloxypropyltriméthoxysilane (GPTSI), le 3-glycidyloxypropyltriéthoxysilane, le 2-(3,4-époxycyclohexyl)-éthyltriméthoxysilane (ECETSI).

Par polymères diéniques susceptibles d'être mis en oeuvre dans la composition conforme à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone. A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...

Les copolymères peuvent contenir entre 99 % et 20 % en poids d'unités diéniques et de 1 % à 80 % en poids d'unités vinylaromatiques.

Les polymères diéniques fonctionnalisés peuvent avoir toute microstructure qui est fonction des conditions de polymérisation utilisées. Les polymères peuvent être à blocs, statistiques, séquencés, microséquencés, etc... et être préparés en dispersion ou en solution. Lorsqu'il s'agit d'une polymérisation anionique, la microstructure de ces polymères peut être déterminée par la présence ou non d'un agent modifiant et/ou randomisant et les quantités d'agent modifiant et/ou randomisant employées.

A titre préférentiel conviennent les polybutadiènes et en particulier ceux ayant une teneur en unités-1,2 comprise entre 4 % et 80 %, les polyisoprènes, les copolymères de butadiène-styrène et en particulier ceux ayant une teneur en styrène comprise entre 4 et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, les copolymères de butadiène-isoprène et notamment ceux ayant une teneur en isoprène comprise entre 5 et 90 % en poids et une température de transition vitreuse (Tg) de -40 °C à -80 °C, les copolymères isoprène-styrène et notamment ceux ayant une teneur en styrène comprise entre 5 et 50 % en poids et une Tg comprise entre -25°C et - 50°C. Dans le cas de copolymères de butadiène-styrène-isoprène conviennent ceux ayant une teneur en styrène comprise entre 5 et 50 % en poids et plus particulièrement comprise entre 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 % et plus généralement tout copolymère butadiène-styrène-isoprène ayant une Tg comprise entre -20°C et -70°C.

En tant qu'initiateurs de polymérisation, on peut utiliser tout initiateur anionique ou non, mono- ou polyfonctionnel connu. Toutefois un initiateur contenant un métal alcalin tel que le lithium ou alcalino-terreux tel que le baryum est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyllithium, le n- butyllithium (n-BuLi), l'isobutyllithium, les polyméthylènes dilithium tels que le 1,4-dilithiobutane, etc... Les amidures de lithium sont également des initiateurs préférés comme décrit dans le brevet FR 2 250 774. Des composés représentatifs contenant du baryum sont ceux décrits par exemple dans les demandes de brevet FR-A-2 302 311 et FR-A-2 273 822 et les certificats d'addition FR-A-2 338 953 et FR-A-2 340 958.

Le procédé de préparation de tels polymères fonctionnalisés alcoxysilanes est présenté en détail dans la demande EP-A-0 692 493.

Les polymères diéniques fonctionnalisés alcoxysilanes ainsi obtenus se sont révélés particulièrement intéressants, comme le précise la demande de brevet EP-A-0 692 493, pour conférer des propriétés améliorées vis à vis de la silice à des compositions contenant à la fois de la silice et du noir de carbone à titre de charge renforçante.

Or, la demanderesse a découvert de manière surprenante que ces mêmes polymères fonctionnalisés alcoxysilane permettent d'obtenir des propriétés hystérétiques et physiques améliorées pour des compositions contenant du noir de carbone ayant de la silice fixée à sa surface à titre de charge renforçante, tant vis-à-vis de compositions comportant du noir de carbone à titre de charge renforçante, que vis-à-vis de compositions comportant à titre de charge renforçante de la silice hautement dispersible, l'homme de l'art n'ignorant pas, par ailleurs, que ce type de silice permet l'obtention

d'un compromis de propriétés bien plus intéressants que les silices non dispersibles. La demanderesse a, de plus, découvert que de telles propriétés améliorées étaient également obtenues avec des compositions utilisant ces polymères fonctionnalisés alcoxysilanes et du noir de carbone ayant de la silice fixée à sa surface, en l'absence d'agent de couplage.

Ce noir de carbone ayant de la silice fixée à sa surface peut être utilisé en coupage avec d'autres charges renforçantes telles que du noir de carbone ou des charges blanches, notamment la silice, l'alumine, le kaolin, la craie. Le pourcentage relatif de ces charges peut être ajusté en fonction du compromis de propriétés de la composition souhaité par l'homme de l'art.

Le taux de noir de carbone ayant de la silice fixée à sa surface est au moins égal à 30 parties en poids pour 100 parties de polymère.

Le taux de silice présent à la surface du noir de carbone représente de 0,1 à 50% en poids, préférablement de 0,3 à 30%.

Ce noir de carbone ayant de la silice fixée à sa surface peut être obtenu par différents modes de fabrication. On citera, à titre d'exemple, les modes de fabrication décrits dans la demande de brevet EP-A-0 711 805, la demande de brevet japonais N°63-63755 ou le procédé de fabrication de l'ECOBLACK CRX2000 commercialisé par la société CABOT et décrit dans la demande de brevet WO96/37547.

A titre de silice susceptible d'être mise en oeuvre dans l'invention conviennent toutes les silices précipitées ou pyrogénées connues de l'homme de l'art et en particulier, les silices hautement dispersibles. Par silice hautement dispersible, on entend toute silice ayant une aptitude à la désagglomération et à la dispersion dans une matrice polymérique très importante observable par microscopie électronique ou optique, sur coupes fines. La dispersibilité de la silice est également appréciée au moyen d'un test d'aptitude à la désagglomération aux ultrasons suivi d'une mesure, par diffraction sur un granulomètre, de la taille des particules de silice pour déterminer le diamètre médian (D50) des particules et le facteur de désagglomération ($F_D$) après désagglomération comme décrit dans la demande de brevet EP-A-0.520.860 ou dans l'article paru dans la revue Rubber World, juin 1994, pages 20-24, intitulé « Dispersibility measurements of prec. silicas ».

Comme exemples non limitatifs de telles silices, on peut citer la silice Perkasil KS 430 de la société AKZO, les silices Zeosil 1165 MP, 120 MP et 85 MP de la société Rhône-Poulenc, la silice HI-Sil 2000 de la société PPG, les silices Zeopol 8741 ou 8745 de la société Huber, la silice « dopée » aluminium décrite dans la demande de brevet EP-A-0 735 088.

Comme noirs de carbone conviennent tous les noirs de carbone commercialement disponibles ou conventionnellement utilisés dans les pneus et particulièrement dans les bandes de roulement de pneus. A titre d'exemples non limitatifs de tels noirs on peut citer les noirs N 234, N 339, N 326, N 375, etc...

Le polymère diénique fonctionnalisé alcoxysilane peut-être utilisé seul dans la composition conforme à l'invention ou être utilisé en coupage avec tout autre élastomère conventionnellement utilisé dans les pneus tel que du caoutchouc naturel ou un coupage à base de caoutchouc naturel et un élastomère synthétique ou encore un autre polymère diénique éventuellement couplé et/ou étoilé ou encore partiellement ou entièrement fonctionnalisé avec une fonction autre que la fonction alcoxysilane répondant à la formule générale I. Il est évident que plus la proportion d'élastomère conventionnel présent dans la composition conforme à l'invention est importante, moindre sera l'amélioration des propriétés. C'est pourquoi l'élastomère conventionnel peut être présent entre 1 et 50 parties en poids pour 100 parties en poids de polymère fonctionnalisé alcoxysilane.

Les compositions conformes à l'invention contiennent, outre un ou plusieurs polymères diéniques et le noir de carbone ayant de la silice fixée à sa surface, tout ou partie des autres constituants et additifs habituellement utilisés dans les mélanges de caoutchouc comme des plastifiants, pigments, antioxydants, cires anti-ozonantes, un système de vulcanisation à base soit de soufre et/ou de peroxyde et/ou de bismaleimides, des accélérateurs de vulcanisation, des huiles d'extension, un ou des agents de liaison avec l'élastomère et/ou de recouvrement de la silice tels que des alcoxysilanes, polyols, amines, etc...

L'invention a également pour objet des bandes de roulement de pneumatiques et des pneumatiques possédant une résistance au roulement réduite.

L'invention est illustrée à titre non limitatif par les exemples qui ne sauraient constituer une limitation de la portée de l'invention.

Dans les exemples, les propriétés des compositions sont évaluées comme suit :

- Viscosité Mooney ML (1+4) à 100°C, mesurée selon la norme ASTM:D-1646, intitulée Mooney dans les tableaux.
- Modules d'allongement à 300 % (MA 300), 100 % (MA100) et 10 % (MA 10) : mesures effectuées selon la norme ISO 37.
- Indices de cassage Scott : mesurés à 20°C (Force à la rupture en MPa, Fr, Allongement à la rupture en %, Ar)
- Pertes hystérétiques mesurées à 60°C en %. La déformation pour les pertes mesurées est de 35%
- Dureté Shore A : mesures effectuées selon la norme DIN 53505

- Propriétés dynamiques en cisaillement :
  Mesures effectuées en fonction de la déformation à 10 à 23°C.
  La non linéarité Δ G exprimée en MPa est la différence de module de cisaillement entre 0.15 % et 50 % de déformation crête-crête.
  L'hystérèse est exprimée par la mesure du maximum de G" et du maximum de tgδ à 23°C et environ 7 % de déformation, respectivement notés $G''_{max\ 23°}$ et $tg\delta_{max\ 23°}$, selon la norme ASTM D2231-71 (réapprouvée en 1977).
- La résistivité volumique ($\rho_V$) est mesurée, en ohm.cm, selon la norme ASTM D257, sa valeur est comprise entre $10^5$ et $10^{10}$ Ωcm. Son expression sera donnée sous la forme de son logarithme en base 10, noté Log résistivité.

Exemple 1

Cet exemple a pour but de comparer les propriétés d'une composition à base d'un polymère fonctionnalisé alcoxysilane à deux autres compositions à base des mêmes polymères mais dont respectivement l'un n'est pas fonctionnalisé et l'autre est fonctionnalisé avec un agent de fonctionnalisation connu dans l'état de la technique, ces trois compositions possédant à titre de charge renforçante du noir de carbone ayant de la silice fixée à sa surface.

Dans tous les essais de cet exemple, le polymère diénique est un copolymère butadiène-styrène ayant un taux de liaisons 1, 2 butadiènique de 40%, un taux de styrène de 25%, une température de transition vitreuse Tg de -38°C et une viscosité Mooney de 60.

Les copolymères butadiène-styrène mis en oeuvre dans les trois compositions sont :

- pour l'essai A, un copolymère fonctionnalisé alcoxysilane conformément à l'invention, fonctionnalisé (SBR-A) à cet effet à l'aide d'un agent de fonctionnalisation constitué par du glycidyloxypropyltriméthoxysilane, GPTSI,
- pour l'essai B, un copolymère fonctionnalisé (SBR-B) avec la bis-diéthylaminobenzophénone, DEAB, reconnue pour permettre l'obtention de compositions ayant de bonnes propriétés hystérétiques avec le noir de carbone,
- pour l'essai C, un copolymère non fonctionnalisé (SBR-C) stoppé au méthanol.

Ces SBR ont été synthétisés en continu dans le toluène comme solvant de polymérisation et avec le butyl lithium comme initiateur. Ainsi pour tous les essais, le copolymère est préparé dans un réacteur de 32 litres de capacité utile avec agitateur du type turbine, dans lequel on introduit en continu du toluène, du butadiène, du styrène et du THF dans un rapport massique 100 : 10 : 4,3 : 0,3 et une solution de 500 micromoles de n-BuLi actif pour cent grammes de monomères. Les débits des différentes solutions sont calculés pour avoir un temps moyen de séjour de 45 minutes sous forte agitation. La température est maintenue constante à 60°C. En sortie de réacteur la conversion mesurée est de 88% et le SBR contient 25% de styrène incorporé (en masse) et une teneur de 40% en liaisons-1,2 pour la partie butadiénique.

Pour obtenir le SBR-A, l'agent de fonctionnalisation, le glycidyloxypropyltriméthoxysilane (GPTSI), est ajouté au polymère vivant soit à l'entrée d'un mélange statique (MS) conventionnel comportant 26 éléments et un volume de 250 ml, soit à l'entrée d'un mélangeur dynamique (MD) de 250 ml muni d'un agitateur réglé à une vitesse de rotation de 2500 tours par minute. Le GPTSI est introduit dans un rapport GPTSI/n-BuLi actif = 2. La réaction de fonctionnalisation est effectuée à 60°C.

Dans le cadre de la synthèse du SBR-B, la bis-diéthylaminobenzophénone, DEAB, est ajoutée à la place du GPTSI dans un rapport DEAB/n-BuLi actif =1,5. Pour obtenir le SBR-C, la DEAB est remplacée par du méthanol dans un rapport MeOH/n-BuLi actif = 1,5.

Dans les trois cas, après 5 minutes, on ajoute 0,8 partie pour cent parties d'élastomère (pce) de 2,2'-méthylène bis(4-méthyl-6tertiobutylophénol) et 0,2 pce de N-(1,3-diméthylbutyl)-N'-phényl-p-phénylènediamine en tant qu'anti-oxydants. Les polymères sont récupérés par l'opération classique de récupération par stripping à la vapeur d'eau du solvant puis séchés sur outil à cylindres à 100°C pendant 10 minutes.

La mesure du taux de fonction époxy et d'atomes de silicium est effectuée par RMN du proton, comme décrit dans la demande de brevet EP-A-0 692 493. Ainsi, la mesure permet de déterminer que le polymère fonctionnalisé SBR-A contient 5,3 millimoles de motif $SiCH_2$ et 4,9 millimoles de motif époxy par kilogramme de polymère. La masse moléculaire obtenue par osmométrie du polymère est de 170 000 g/mole. Ces valeurs permettent d'obtenir les rapports PF et PV qui sont respectivement de : PF = 0,90 et PV = 0,92.
Pour le polymère fonctionnalisé SBR-B, le nombre de millimoles de motif

$$[(C_2H_5)_2N\text{-}C_6H_4]_2\text{-}C\text{-}OH$$

déterminé par RMN du proton est de 4,7 par kilogramme de polymère, ce qui correspond à un taux de fonction de 82%, la masse moléculaire étant de 175 000 g/mole.

A l'aide des 3 copolymères SBR-A, B et C, on prépare comme connu en soi, 3 compositions de caoutchouc respectivement A1, B1 et C1 renforcées par un noir de carbone ayant de la silice fixée à sa surface, selon la formulation suivante où toutes les parties son exprimées en poids :

| | |
|---|---|
| Elastomère | 100 |
| Noir traité silice(*) | 60 |
| Huile aromatique | 25 |
| Agent de liaison(**) | 1,8 |
| Oxyde de zinc | 2,5 |
| Acide stéarique | 1,5 |
| Antioxydant (a) | 1,9 |
| Paraffine (b) | 1,5 |
| Soufre | 1,1 |
| Sulfénamide (c) | 2 |
| Diphénylguanidine | 0,42 |

(*) Le noir de carbone ayant de la silice fixée à sa surface est un noir commercialisé par la société CABOT sous la dénomination NOIR ECOBLACK CRX2000 (% Si : 2,74 sans traitement HF/ 0,33% après traitement HF; surface spécifique (N2) : 138,9 $m^2/g$ sans traitement HF, 179,6 $m^2/g$ après traitement HF).

(**) Organosilane polysulfuré commercialisé par la Société Degussa sous la dénomination SI69.

(a) :Antioxydant : N-(1,3-diméthyl-butyl)-N'-phényl-p-phénylènediamine

(b) : Paraffine : mélange de cires macro et microcristallines

(c) : Sulfénamide : N-cyclohexyl-2-benzothiazyl sulfénamide

Les 3 copolymères décrits ci-dessus sont mis en oeuvre dans une composition réalisée selon la méthode décrite dans la demande de brevet EP-A-0 501 227, étant précisé qu'on opère un travail thermo-mécanique en deux étapes qui durent respectivement 5 et 4 minutes, pour une vitesse moyenne des palettes de 45 tours/minute jusqu'à atteindre une température maximale de tombée identique de 160°C tandis que l'introduction du système de vulcanisation est effectué à 30°C sur un outil à cylindres.

La vulcanisation est effectuée à 150°C pendant 50 minutes. On compare entre elles les propriétés de ces 3 compositions tant à l'état non vulcanisé qu'à l'état vulcanisé.

Les résultats sont consignés dans le tableau 1.

TABLEAU 1

| Compositions | A1 | B1 | C1 |
|---|---|---|---|
| Stoppeur | GPTSI | DEAB | MeOH |
| Propriétés à l'état non vulcanisé | | | |
| ML(1+4)100° | 100 | 87,5 | 75,5 |
| Propriétés à l'état vulcanisé | | | |
| Log résistivité | 8,38 | 8,14 | 7,98 |
| Shore | 59,5 | 58,8 | 59,7 |
| MA10 | 4,21 | 4,15 | 4,14 |
| MA100 | 1,73 | 1,56 | 1,56 |
| MA300 | 2,72 | 2,32 | 2,32 |
| MA300/MA100 | 1,57 | 1,49 | 1,49 |
| Scott 20°C Fr | 20,6 | 23,7 | 21,2 |
| 20°C Ar % | 485 | 585 | 530 |
| PH 60°C | 23,4 | 24,4 | 26,1 |
| Propriétés dynamiques en fonction de la déformation | | | |
| $\Delta G_{à\ 23°C}$ | 1,43 | 2,29 | 2,60 |

TABLEAU 1 (suite)

| Compositions | A1 | B1 | C1 |
|---|---|---|---|
| Propriétés dynamiques en fonction de la déformation | | | |
| G" $_{max\ 23°}$ | 0,45 | 0,70 | 0,83 |
| tgδ $_{max\ 23°}$ | 0,25 | 0,29 | 0,33 |

On constate au niveau des propriétés à l'état vulcanisé, que la composition A1 à base de SBR-A (fonctionnalisé GPTSI) présente des propriétés hystérétiques nettement meilleures que la composition C1 comportant le SBR-C (stoppé méthanol) à faible (G" $_{max\ 23°}$; tgδ $_{max\ 23°}$) et à forte (PH 60°C) déformation, mais également meilleures que celles obtenues avec la composition B1 (SBR-B fonctionnalisé DEAB), sans dégrader les autres propriétés.

Exemple 2

Cet exemple a pour objet de comparer la composition de caoutchouc A1 selon l'invention (contenant un polymère fonctionnalisé GPTSI et du noir de carbone ayant de la silice fixée à sa surface) avec une composition B2 contenant respectivement le SBR-B fonctionnalisé grâce à la DEAB et une charge constituée par du noir de carbone, et une composition C2 comprenant le SBR-C, une charge constituée par de la silice et un agent de couplage silane. Ces deux dernières compositions, B2 et C2, étant reconnues pour donner respectivement pour le noir de carbone et la silice de bonnes propriétés hystérétiques.
On suit la même méthode de fabrication que celle décrite dans l'exemple 1 pour la composition C1.

Ces compositions ont les formulations suivantes :

| Composition B2 | | Composition C2 | |
|---|---|---|---|
| Elastomère | 100 | Elastomère | 100 |
| Noir de carbone N234 | 60 | Silice(*) | 60 |
| Huile aromatique | 25 | Huile aromatique | 25 |
| | | Agent de liaison(**) | 4,8 |
| Oxyde de zinc | 3 | Oxyde de zinc | 2,5 |
| Acide stéarique | 2 | Acide stéarique | 1,5 |
| Antioxydant (a) | 1,9 | Antioxydant (a) | 1,9 |
| Paraffine (b) | 1,5 | Paraffine (b) | 1,5 |
| Soufre | 1,2 | Soufre : | 1,1 |
| Sulfénamide (c) | 1,2 | Sulfénamide (c) | 2 |
| | | Diphénylguanidine | 1,5 |

(*) Silice : ZEOSIL 1165 commercialisée par la société Rhône-Poulenc.
(**) Organosilane polysulfuré commercialisé par la Société Degussa sous la dénomination SI69.

Les résultats obtenus sont reportés dans le tableau 2

TABLEAU 2

| Compositions | A1 | B2 | C2 |
|---|---|---|---|
| Stoppeur<br>Charge | GPTSI<br>Noir traité silice | DEAB<br>Noir | MeOH<br>Silice |
| Propriétés à l'état non vulcanisé | | | |
| ML(1+4)100° | 100 | 90 | 68,5 |
| Propriétés à l'état vulcanisé | | | |
| Log résistivité | 8,38 | 5,3 | >10 |
| Shore | 59,5 | 60 | 58,4 |
| MA10 | 4,21 | 4,44 | 4,16 |
| MA100 | 1,73 | 1,51 | 1,37 |

TABLEAU 2 (suite)

| Compositions | A1 | B2 | C2 |
|---|---|---|---|
| Propriétés à l'état vulcanisé | | | |
| MA300<br>MA300/MA100 | 2,72<br>1,57 | 2,02<br>1,34 | 1,53<br>1,12 |
| Scott 20°C Fr<br>20°C Ar %| 20,6<br>485 | 22,7<br>650 | 23,0<br>705 |
| PH 60°C | 23,4 | 30 | 26,1 |
| Propriétés dynamiques en fonction de la déformation | | | |
| $\Delta$ G $_{à\ 23°C}$<br>G" $_{max\ 23°}$<br>tg$\delta$ $_{max\ 23°}$ | 1,43<br>0,45<br>0,25 | 4,84<br>1,25<br>0,36 | 1,88<br>0,58<br>0,25 |

On constate que la composition A1 (avec SBR-A fonctionnalisé GPTSI) comprenant le noir ECOBLACK CRX2000 présente une très forte diminution de l'hystérèse (à faible et forte déformation) de l'ordre de 30% par rapport à celle obtenue de la composition B2 à base de noir de carbone sans détériorer les autres propriétés.
De plus, on note que la composition A1 présente des propriétés hystérétiques améliorées même par rapport à la composition C2 à base de silice avec un niveau de conductivité fortement réduit.

Exemple 3

Dans cet exemple, on compare trois compositions A3, C3 et B3 respectivement à base des SBR-A (fonctionnalisé avec GPTSI), SBR-C (stoppé avec MeOH) et SBR-B (fonctionnalisé DEAB) ne contenant pas d'agent de liaison mais du noir de carbone ayant de la silice fixée à sa surface à titre de charge renforçante.

Les compositions A3, C3 et B3 sont réalisées selon la méthode présentée dans l'exemple 1, et ont la formulation suivante :

| | |
|---|---|
| Elastomère | 100 |
| Noir traité silice(*) | 60 |
| Huile aromatique | 25 |
| Agent de liaison | 0 |
| Oxyde de zinc | 2,5 |
| Acide stéarique | 1,5 |
| Antioxydant (a) | 1,9 |
| Paraffine (b) | 1,5 |
| Soufre | 1,1 |
| Sulfénamide (c) | 2 |
| Diphénylguanidine | 0,42 |

(*) le noir de carbone ayant de la silice fixée à sa surface est un noir commercialisé par la société CABOT sous la dénomination NOIR ECOBLACK CRX2000 (% Si : 2,74 sans traitement HF/ 0,33% après traitement HF; surface spécifique (N2) : 138,9 $m^2$/g sans traitement HF, 179,6 $m^2$/g après traitement HF).

Les résultats obtenus sont consignés dans le tableau 3.

TABLEAU 3

| Compositions | A3 | B3 | C3 |
|---|---|---|---|
| Stoppeur | GPTSI | DEAB | MeOH |
| Propriétés à l'état non vulcanisé | | | |
| ML(1+4)100° | 103 | 91,5 | 76,5 |

TABLEAU 3 (suite)

| Compositions | A3 | B3 | C3 |
|---|---|---|---|
| Propriétés à l'état vulcanisé | | | |
| Log résistivité | 7,61 | 7,09 | 6,79 |
| Shore | 55,3 | 57,3 | 58,1 |
| MA10 | 3,66 | 4,13 | 4,35 |
| MA100 | 1,33 | 1,32 | 1,30 |
| MA300 | 1,88 | 1,65 | 1,61 |
| MA300/MA100 | 1,41 | 1,25 | 1,24 |
| Scott 20°C Fr | 21,8 | 21,9 | 20,8 |
| 20°C Ar % | 620 | 670 | 685 |
| PH 60°C | 27,2 | 28,8 | 33,4 |
| Propriétés dynamiques en fonction de la déformation | | | |
| $\Delta G_{à\ 23°C}$ | 1,49 | 3,03 | 3,83 |
| $G''_{max\ 23°}$ | 0,54 | 0,78 | 0,97 |
| $tg\delta_{max\ 23°}$ | 0,26 | 0,38 | 0,38 |

On constate que même sans utilisation d'agent de liaison, la composition A3 utilisant le SBR-A (fonctionnalisé GPTSI) présente un niveau d'hystérèse à faible ($G''_{max\ 23}$; $tg\delta_{max\ 23°}$) et forte (PH 60°C) déformation très bas par rapport aux deux autres compositions qui comprennent également du noir de carbone ayant de la silice fixée à sa surface à titre de charge renforçante, sans qu'il y ait de dégradation des autres propriétés.

De plus, on observe une légère détérioration des propriétés hystérétiques des compositions B3 et C3 à base respectivement de SBR-B et SBR-C relativement aux compositions B2 et C2 de l'exemple 2 à base des mêmes polymères mais contenant un agent de recouvrement et de liaison, alors qu'au contraire les propriétés hystérétiques de la composition A3 sont voisines de celles de la composition A1 contenant un agent de liaison.
Il faut également souligner que les autres propriétés de cohésion mécanique (MA300, force et allongement à la rupture) de la composition A3 ne sont pas non plus dégradées par rapport à la composition A1, pas plus que le niveau de conductibilité.

Exemple 4

Cet exemple a pour but de comparer la composition A1 conforme à l'invention à deux autres compositions D1 et E1 à base de SBR commerciaux.

Les compositions D1 et E1 sont réalisées à base respectivement des SBR commerciaux suivants :

- le T0589, fabriqué par la société JAPAN SYNTHETIC RUBBER, est un polymère modifié spécifiquement pour réagir avec la silice, ayant les caractéristiques suivantes Tg = -32°C, %1,2 = 41%, %sty = 33%, ML(1+4)100° = 45.,
- le NS116, fabriqué par la société NIPPON ZEON, est un polymère modifié spécifiquement pour réagir avec le noir de carbone, ayant les caractéristiques suivantes Tg = -25°C, %1,2 = 60%, %sty = 21%, ML(1+4)100° = 50.

Les trois compositions A1, D1 et E1 possèdent la même formulation que celle précisée dans l'exemple 1 à base de noir de carbone ayant de la silice fixée à sa surface (ECOBLACK CRX2000), la méthode de préparation de ces compositions est également identique à celle utilisée pour la composition A1 de l'exemple 1.

Les résultats obtenus sont consignés dans le tableau 4.

TABLEAU 4

| Compositions | A1 | D1 | E1 |
|---|---|---|---|
| SBR | SBR-A | T0589 | NS116 |
| Propriétés à l'état non vulcanisé | | | |
| ML(1+4)100° | 100 | 56 | 48 |

TABLEAU 4 (suite)

| Compositions | A1 | D1 | E1 |
|---|---|---|---|
| Propriétés à l'état vulcanisé | | | |
| Log résistivité | 8,38 | 7,84 | 7,48 |
| Shore | 59,5 | 58,6 | 59,8 |
| MA10 | 4,21 | 4,39 | 4,47 |
| MA100 | 1,73 | 1,72 | 1,70 |
| MA300 | 2,72 | 2,60 | 2,49 |
| MA300/MA100 | 1,57 | 1,51 | 1,46 |
| Scott 20°C Fr | 20,6 | 23,3 | 20,8 |
| 20°C Ar % | 485 | 535 | 515 |
| PH 60°C | 23,4 | 29,0 | 29,1 |
| Propriétés dynamiques en fonction de la déformation | | | |
| $\Delta$ G $_{à\ 23°C}$ | 1,43 | 2,47 | 2,60 |
| G" $_{max\ 23°}$ | 0,45 | 0,0951 | 0,977 |
| tg$\delta$ $_{max\ 23°}$ | 0,25 | 0,341 | 0,364 |

On constate, au vu des propriétés à l'état vulcanisé, que la composition A1 à base d'un SBR-A conforme à l'invention permet d'obtenir des propriétés d'hystérèse très faibles et des propriétés de renforcement très élevées par rapport aux deux compositions D1 et El.
Il apparaît donc que l'utilisation de n'importe quel polymère fonctionnalisé adapté à du noir de carbone, ne permet pas d'obtenir une amélioration des propriétés hystérétiques et physiques lors de son utilisation dans une composition à base de noir traité silice (ici l'ECOBLACK CRX2000), pas plus que la transposition de n'importe quel polymère fonctionnalisé spécifiquement pour la silice à une composition comportant du noir traité silice à titre de charge renforçante.

## Revendications

1. Composition de caoutchouc vulcanisable comprenant au moins un polymère diénique fonctionnalisé; du noir de carbone ayant de la silice fixée à sa surface à titre de charge renforçante, **caractérisée en ce que** le polymère diénique est un polymère diénique fonctionnalisé avec un agent de fonctionnalisation répondant à la formule générale I:

$$(Y)_m\text{-}R^1\text{-}Si(OR^2)_{3-n}R^3{}_n$$

dans laquelle :

Y représente les restes

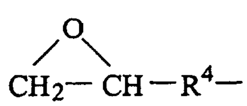

ou

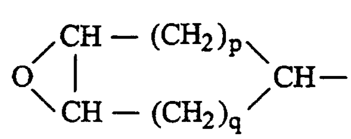

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,

n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,

ledit polymère satisfait simultanément aux 2 rapports :

$$PF = \frac{Ns}{Np \times (fn)} \geq 0{,}85 \qquad \text{et} \qquad PV = \frac{Ne}{Ns \times m} \geq 0{,}90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé,
m a la signification indiquée précédemment.

**2.** Composition selon la revendication 1, **caractérisée en ce que** l'agent de fonctionnalisation est choisi parmi le 3-glycidyloxypropyltriméthoxysilane et le 2-(3,4-époxycyclohexyl)-éthyltriméthoxysilane.

**3.** Composition selon la revendications 1 ou 2, **caractérisée en ce que** le polymère diénique fonctionnalisé est choisi dans le groupe constitué par le polybutadiène, un copolymère de butadiène-styrène ou de butadiène-styrène-isoprène.

**4.** Composition selon la revendication 3, **caractérisée en ce qu'**elle comprend de 1 à 50 parties en poids d'un autre élastomère conventionnellement utilisé dans les pneus pour 100 parties dudit polymère fonctionnel.

**5.** Composition selon l'une quelconque des revendications 1 à 4, **caractérisée en ce que** le taux de silice présent à la surface du noir de carbone représente de 0,1 à 50% en poids.

**6.** Composition selon la revendication 5, **caractérisée en ce que** le taux de silice présent à la surface du noir de carbone représente de 0,3 à 30% en poids.

**7.** Composition selon l'une quelconque des revendications 1 à 6, **caractérisée en ce que** le noir de carbone ayant de la silice fixée à sa surface est utilisé en coupage avec d'autres charges renforçantes.

**8.** Pneumatique comprenant une composition de caoutchouc vulcanisée comprenant au moins un polymère diénique fonctionnalisé, du noir de carbone ayant de la silice fixée à sa surface à titre de charge renforçante, **caractérisé en ce que** le polymère diénique est un polymère diénique fonctionnalisé avec un agent de fonctionnalisation répondant à la formule générale I :

$$(Y)_m\text{-}R^1\text{-}Si(OR^2)_{3-n}R^3{}_n$$

dans laquelle :

Y représente les restes

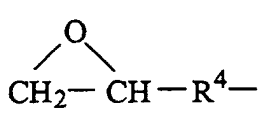

ou

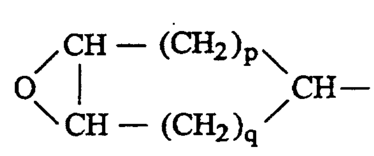

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,

ledit polymère satisfait simultanément aux 2 rapports :

$$PF = \frac{Ns}{Np \times (fn)} \geq 0{,}85 \qquad \text{et} \qquad PV = \frac{Ne}{Ns \times m} \geq 0{,}90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé,
m a la signification indiquée précédemment.

**9.** Pneumatique selon la revendication 8, **caractérisé en ce que** la composition entre dans la constitution de la bande de roulement.

**10.** Bande de roulement de pneumatique constituée par une composition de caoutchouc vulcanisée comprenant au moins un polymère diénique fonctionnalisé, du noir de carbone ayant de la silice fixée à sa surface, **caractérisée en ce que** le polymère diénique est un polymère diénique fonctionnalisé avec un agent de fonctionnalisation répondant à la formule générale I :

$$(Y)_m\text{-}R^1\text{-}Si(OR^2)_{3-n}R^3{}_n$$

dans laquelle :

Y représente les restes

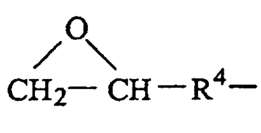

ou

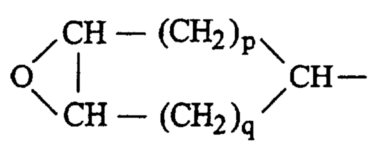

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,

ledit polymère satisfait simultanément aux 2 rapports :

$$PF = \frac{Ns}{Np \times (fn)} \geq 0{,}85 \qquad \text{et} \qquad PV = \frac{Ne}{Ns \times m} \geq 0{,}90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé,
m a la signification indiquée précédemment.

## Claims

**1.** A vulcanisable rubber composition comprising at least one functionalised diene polymer and carbon black having silica fixed to its surface as reinforcing filler, **characterised in that** the diene polymer is a diene polymer functionalised by means of a functionalising agent of general formula I:

$$(Y)_m\text{-}R^1\text{-}Si(OR^2)_{3-n}R^3{}_n$$

wherein:

Y represents the groups

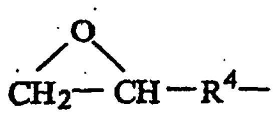

or

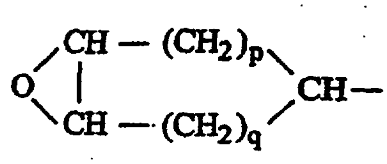

$R^1$ represents an alkyl, cycloalkyl or aryl group containing 1 to 10 carbon atoms,
$R^2$ represents an alkyl, aryl, cycloalkyl, alkaryl or aralkyl group containing 1 to 12 carbon atoms,
$R^3$ represents an alkyl, aryl or alkaryl group containing 1 to 12 carbon atoms,
$R^4$ represents a hydrocarbon group containing 1 to 6 carbon atoms and which may comprise one or more oxygen atoms in the hydrocarbon chain,
n is an integer selected from among 0 and 1,
m is an integer selected from among 1 or 2,
p and q are integers selected from among 0, 1, 2, 3 or 4, with the proviso that the sum p + q must represent an integer between 2 and 5 inclusive,

said polymer simultaneously satisfying the two ratios:

$$PF = \frac{Ns}{Np \times (fn)} \geq 0.85 \qquad \text{and} \qquad PV = \frac{Ne}{Ns \times m} \geq 0.90$$

wherein

Ns represents the number of moles of silicon linked to one end of the polymer chain of the functionalised polymer,
Np represents the number of moles of polymer before functionalisation,

f(n) represents the functionality of the polymerisation initiator,
Ne represents the number of moles of epoxy function linked to one end of the polymer chain of the functionalised polymer, and
m has the same meaning as above.

2. A composition according to Claim 1, **characterised in that** the functionalising agent is selected from among 3-glycidyloxypropyltrimethoxysilane and 2-(3,4-epoxycyclohexyl)-ethyltrimethoxysilane.

3. A composition according to Claims 1 or 2, **characterised in that** the functionalised diene polymer is selected from the group consisting of polybutadiene, a butadiene-styrene copolymer or a butadiene-styrene-isoprene copolymer.

4. A composition according to Claim 3, **characterised in that** it comprises from 1 to 50 parts by weight of another elastomer conventionally used in tyres.

5. A composition according to any one of Claims 1 to 4, **characterised in that** the amount of silica present on the surface of the carbon black represents 0.1 to 50% by weight.

6. A composition according to Claim 5, **characterised in that** the amount of silica present on the surface of the carbon black represents 0.3 to 30% by weight.

7. A composition according to any one of Claims 1 to 6, **characterised in that** the carbon black having silica fixed to its surface is used in a blend with other reinforcing fillers.

8. A tyre comprising a composition of vulcanised rubber comprising at least one functionalised diene polymer, and carbon black having silica fixed to its surface as reinforcing filler, **characterised in that** the diene polymer is a diene polymer functionalised by means of a functionalising agent of general formula I:

$$(Y)_m\text{-}R^1\text{-}Si(OR^2)_{3-n}R^3{}_n$$

wherein

Y represents the groups

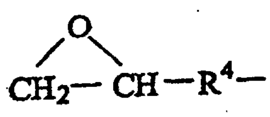

or

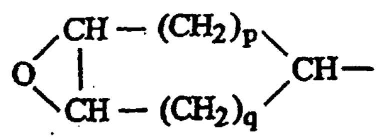

$R^1$ represents an alkyl, cycloalkyl or aryl group containing 1 to 10 carbon atoms,
$R^2$ represents an alkyl, aryl, cycloalkyl, alkaryl or aralkyl group containing 1 to 12 carbon atoms,
$R^3$ represents an alkyl, aryl or alkaryl group containing 1 to 12 carbon atoms,
$R^4$ represents a hydrocarbon group containing 1 to 6 carbon atoms and which may contain one or more oxygen atoms in the hydrocarbon chain,
n is an integer selected from among 0 and 1,
m is a integer selected from among 1 or 2,
p and q are integers selected from among 0, 1, 2, 3 or 4, with the proviso that the sum p + q must represent an integer between 2 and 5 inclusive,

said polymer simultaneously satisfying the two ratios:

$$PF = \frac{Ns}{Np\ x\ (fn)} \geq 0.85 \qquad \text{and} \qquad PV = \frac{Ne}{Ns\ x\ m} \geq 0.90$$

wherein:

- Ns represents the number of moles of silicon linked to one end of the polymer chain of the functionalised polymer,
- Np represents the number of moles of polymer before functionalisation,
- f(n) represents the functionality of the polymerisation initiator,
- Ne represents the number of moles of epoxy function linked to one end of the polymer chain of the functionalised polymer, and

- m has the same meaning as above.

**9.** A tyre according to Claim 8, **characterised in that** the composition enters into the constitution of the tyre tread.

**10.** A tyre tread composed of a vulcanised rubber composition comprising at least one functionalised diene polymer and carbon black having silica fixed to its surface, **characterised in that** the diene polymer is a diene polymer functionalised with a functionalising agent of general formula I:

$$(Y)_m\text{-}R^1\text{-}Si(OR^2)_{3-n}R^3{}_n$$

wherein

Y represents the groups

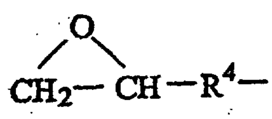

or

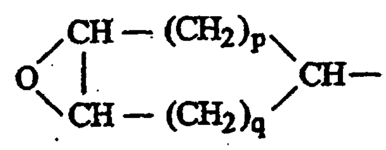

$R^1$ represents an alkyl, cycloalkyl or aryl group containing 1 to 10 carbon atoms,
$R^2$ represents an alkyl, aryl, cycloalkyl, alkaryl or aralkyl group containing 1 to 12 carbon atoms,
$R^3$ represents an alkyl, aryl or alkaryl group containing 1 to 12 carbon atoms,
$R^4$ represents a hydrocarbon group containing 1 to 6 carbon atoms and which may contain one or more oxygen atoms in the hydrocarbon carbon,
n is an integer selected from among 0 and 1,
m is a integer selected from among 1 or 2,
p and q are integers selected from among 0, 1, 2, 3 or 4, with the proviso that the sum p + q must represent an integer between 2 and 5 inclusive,

said polymer simultaneously satisfying the two ratios:

$$PF = \frac{Ns}{Np\ x\ (fn)} \geq 0.85 \qquad \text{and} \qquad PV = \frac{Ne}{Ns\ x\ m} \geq 0.90$$

wherein:

- Ns represents the number of moles of silicon linked to one end of the polymer chain of the functionalised polymer,
- Np represents the number of moles of polymer before functionalisation,
- f(n) represents the functionality of the polymerisation initiator,
- Ne represents the number of moles of epoxy function linked to one end of the polymer chain of the functionalised polymer, and
- m has the same meaning as above.

**Patentansprüche**

**1.** Vulkanisierbare Kautschukmischung, die mindestens ein funktionalisiertes Dienpolymer und als verstärkenden

Füllstoff Ruß, an dessen Oberfläche Siliciumdioxid fixiert ist, enthält, **dadurch gekennzeichnet, dass** das Dienpolymer ein Dienpolymer ist, das mit einem Funktionalisierungsmittel der allgemeinen Formel I funktionalisiert wurde:

$$(Y)_m\text{-}R^1\text{-}Si(OR^2)_{3-n}R^3{}_n$$

worin bedeuten:

- Y die folgenden Reste:

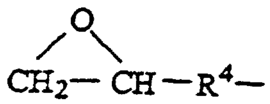

oder

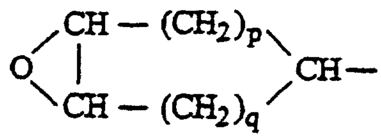

- $R_1$ eine Alkylgruppe, Cycloalkylgruppe oder Arylgruppe mit 1 bis 10 Kohlenstoffatomen,
- $R_2$ eine Alkylgruppe, Arylgruppe, Cycloalkylgruppe, Alkarylgruppe oder Aralkylgruppe mit 1 bis 12 Kohlenstoffatomen,
- $R_3$ eine Alkylgruppe, Arylgruppe oder Alkarylgruppe mit 1 bis 12 Kohlenstoffatomen,
- $R_4$ einen Kohlenwasserstoffrest mit 1 bis 6 Kohlenstoffatomen, wobei in der Kohlenwasserstoffkette ein oder mehrere Sauerstoffatome enthalten sein können,
- n eine ganze Zahl, die unter 0 und 1 ausgewählt ist,
- m eine ganze Zahl, die unter 1 und 2 ausgewählt ist,
- p und q ganze Zahlen, die unter den Werten 0, 1, 2, 3 und 4 ausgewählt sind, mit der Maßgabe, dass die Summe p + q eine ganze Zahl im Bereich von 2 bis 5 bedeutet,

wobei das Polymer gleichzeitig die beiden folgenden Beziehungen erfüllt:

$$PF = \frac{Ns}{Np \times (fn)} \geq 0{,}85 \qquad \text{und} \qquad PV = \frac{Ne}{Ns \times m} \geq 0{,}90$$

worin bedeuten:

· $N_s$ die Stoffmenge des Siliciums, das an ein Ende der Polymerkette des funktionalisierten Polymers gebunden ist,
· $N_p$ die Stoffmenge des Polymers vor der Funktionalisierung,
· f(n) die Funktionalität des Polymerisationsinitiators,
· $N_e$ die Stoffmenge der Epoxygruppe, die an ein Ende der Polymerkette des funktionalisierten Polymers gebunden ist, und
· m die oben angegebene Bedeutung.

**2.** Zusammensetzung nach Anspruch 1, **dadurch gekennzeichnet, dass** das Funktionalisierungsmittel unter 3-Glycidyloxypropyltrirnethoxysilan und 2-(3,4-Epoxycyclohexyl)-ethyltrimethoxysilan ausgewählt ist.

**3.** Zusammensetzung nach Anspruch 1 oder 2, **dadurch gekennzeichnet, dass** das Dienpolymer unter Polybutadien, Butadien-Styrol-Copolymeren oder Butadien-Styrol-Isopren-Copolymeren ausgewählt ist.

**4.** Zusammensetzung nach Anspruch 3, **dadurch gekennzeichnet, dass** sie 1 bis 50 Gewichtsteile eines anderen, gewöhnlich in Reifen verwendeten Polymers auf 100 Teile des funktionellen Polymers enthält.

**5.** Zusammensetzung nach einem der Ansprüche 1 bis 4, **dadurch gekennzeichnet, dass** der Gehalt des an der Oberfläche des Rußes vorliegenden Siliciumdioxid 0,1 bis 50 Gew.-% ausmacht.

**6.** Zusammensetzung nach Anspruch 5, **dadurch gekennzeichnet, dass** der Gehalt des an der Oberfläche des

Rußes vorliegenden Siliciumdioxid 0,3 bis 30 Gew.-% ausmacht.

7. Zusammensetzung nach einem der Ansprüche 1 bis 6, **dadurch gekennzeichnet, dass** der Ruß, an dessen Oberfläche Siliciumdioxid fixiert ist, im Verschnitt mit weiteren verstärkenden Füllstoffen verwendet wird.

8. Luftreifen, der eine vulkanisierte Kautschukmischung enthält, die mindestens ein funktionalisiertes Dienpolymer und als verstärkenden Füllstoff Ruß, an dessen Oberfläche Siliciumdioxid fixiert ist, enthält, **dadurch gekennzeichnet, dass** das Dienpolymer ein Dienpolymer ist, das mit einem Funktionalisierungsmittel der allgemeinen Formel I funktionalisiert wurde:

$$(Y)_m\text{-}R^1\text{-}Si(OR^2)_{3\text{-}n}R^3{}_n$$

worin bedeuten:

- Y die folgenden Reste:

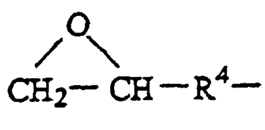

oder

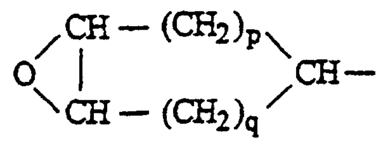

- $R_1$ eine Alkylgruppe, Cycloalkylgruppe oder Arylgruppe mit 1 bis 10 Kohlenstoffatomen,
- $R_2$ eine Alkylgruppe, Arylgruppe, Cycloalkylgruppe, Alkarylgruppe oder Aralkylgruppe mit 1 bis 12 Kohlenstoffatomen,
- $R_3$ eine Alkylgruppe, Arylgruppe oder Alkarylgruppe mit 1 bis 12 Kohlenstoffatomen,
- $R_4$ einen Kohlenwasserstoffrest mit 1 bis 6 Kohlenstoffatomen, wobei in der Kohlenwasserstoffkette ein oder mehrere Sauerstoffatome enthalten sein können,
- n eine ganze Zahl, die unter 0 und 1 ausgewählt ist,
- m eine ganze Zahl, die unter 1 und 2 ausgewählt ist,
- p und q ganze Zahlen, die unter den Werten 0, 1, 2, 3 und 4 ausgewählt sind, mit der Maßgabe, dass die Summe p + q eine ganze Zahl im Bereich von 2 bis 5 bedeutet,

wobei das Polymer gleichzeitig die beiden folgenden Beziehungen erfüllt:

$$PF = \frac{Ns}{Np \times (fn)} \geq 0{,}85 \qquad \text{und} \qquad PV = \frac{Ne}{Ns \times m} \geq 0{,}90$$

worin bedeuten:

· $N_s$ die Stoffmenge des Siliciums, das an ein Ende der Polymerkette des funktionalisierten Polymers gebunden ist,
· $N_p$ die Stoffmenge des Polymers vor der Funktionalisierung,
· f(n) die Funktionalität des Polymerisationsinitiators,
· $N_e$ die Stoffmenge der Epoxygruppe, die an ein Ende der Polymerkette des funktionalisierten Polymers gebunden ist, und
· m die oben angegebene Bedeutung.

9. Luftreifen nach Anspruch 8, **dadurch gekennzeichnet, dass** die Zusammensetzung in dem Laufstreifen enthalten ist.

10. Laufstreifen eines Luftreifens, der aus einer Kautschukmischung besteht, die mindestens ein funktionalisiertes Dienpolymer und Ruß, an dessen Oberfläche Siliciumdioxid fixiert ist, enthält, **dadurch gekennzeichnet, dass** das Dienpolymer ein Dienpolymer ist, das mit einem Funktionalisierungsmittel der allgemeinen Formel I funktionalisiert wurde:

$$(Y)_m\text{-}R^1\text{-}Si(OR^2)_{3-n}R^3{}_n$$

worin bedeuten:

- Y die folgenden Reste:

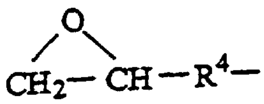

oder

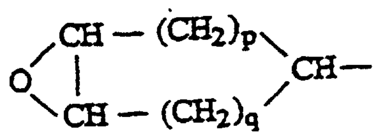

- $R_1$ eine Alkylgruppe, Cycloalkylgruppe oder Arylgruppe mit 1 bis 10 Kohlenstoffatomen,
- $R_2$ eine Alkylgruppe, Arylgruppe, Cycloalkylgruppe, Alkarylgruppe oder Aralkylgruppe mit 1 bis 12 Kohlenstoffatomen,
- $R_3$ eine Alkylgruppe, Arylgruppe oder Alkarylgruppe mit 1 bis 12 Kohlenstoffatomen,
- $R_4$ einen Kohlenwasserstoffrest mit 1 bis 6 Kohlenstoffatomen, wobei in der Kohlenwasserstoffkette ein oder mehrere Sauerstoffatome enthalten sein können,
- n eine ganze Zahl, die unter 0 und 1 ausgewählt ist, und
- m eine ganze Zahl, die unter 1 und 2 ausgewählt ist,
- p und q ganze Zahlen, die unter den Werten 0, 1, 2, 3 und 4 ausgewählt sind, mit der Maßgabe, dass die Summe p + q eine ganze Zahl im Bereich von 2 bis 5 bedeutet,

wobei das Polymer gleichzeitig die beiden folgenden Beziehungen erfüllt:

$$PF = \frac{Ns}{Np \times (fn)} \geq 0{,}85 \qquad \text{und} \qquad PV = \frac{Ne}{Ns \times m} \geq 0{,}90$$

worin bedeuten:

- $N_s$ die Stoffmenge des Siliciums, das an ein Ende der Polymerkette des funktionalisierten Polymers gebunden ist,
- $N_p$ die Stoffmenge des Polymers vor der Funktionalisierung,
- f(n) die Funktionalität des Polymerisationsinitiators,
- $N_e$ die Stoffmenge der Epoxygruppe, die an ein Ende der Polymerkette des funktionalisierten Polymers gebunden ist, und
- m die oben angegebene Bedeutung.